# NEW EUROPEAN PATENT SPECIFICATION

(11) **EP 0 455 301 B2**
(45) Date of publication and mention of the opposition decision: **02.12.1998**
(45) Mention of the grant of the patent: 14.02.1996
(21) Application number: 91201012.1
(22) Date of filing: 25.04.1991
(51) Int. Cl.: C04B 7/60, F27B 7/20

(54) **Method and apparatus for the manufacture of clinker from mineral raw materials**
Verfahren und Vorrichtung zur Herstellung von Klinker aus mineralischen Rohmaterialien
Procédé et dispositif pour la production de clinker à partir de matières bruts minérales

(30) Priority: 04.05.1990 DK 112090
(43) Date of publication of application: 06.11.1991
(73) Proprietor: F.L. Smidth & Co. A/S (reg. no. A/S 173386), DK-2500 Valby, Copenhagen (DK)
(72) Inventor: Enkegaard, Torben, DK-2500 Valby (DK)
(74) Representative: Patentanwälte Leinweber & Zimmermann

(56) References cited:
- DE-A- 3 215 793
- DE-A- 3 326 935
- DE-A- 3 520 447
- DE-B- 1 242 319
- DE-C- 1 126 306
- FR-A- 2 117 595
- FR-A- 2 127 665
- ZEMENT-KALK-GIPS INTERNATIONAL vol. 43, no.1, January 1990, pages 20-25, Wiesbaden, DE; W. KREFT: "Vergleich verschiedener Bypass-Systeme in Klinkerbrennanlagen"

## Description

The present invention relates to a method and an apparatus for the manufacture of clinker from mineral raw materials, e.g. cement clinker, including substantially removing from the clinker chlorides, sulfur and alkalis (potassium, sodium) in a kiln plant in which the raw materials are preheated, optionally precalcined and then burned and sintered into clinker in the kiln proper, and during which process it is desirable to reduce the contents of harmful compounds, such as chlorides and alkalis, in the manufactured product or to reduce the amount of such compounds circulating in the plant and thereby causing process drawbacks

US patent No. 3,365,521 discloses e.g. a kiln plant for the manufacture of clinker, which plant consists of a rotary kiln having a multistep suspension preheater of the cyclone type and a precalciner coupled before the kiln for expelling CO₂ from the treated raw materials and with a cooler coupled after the kiln for cooling the treated product. The raw materials are counter-currently preheated in the suspension preheater by the hot flue gases from the kiln and/or the precalciner, the flue gases thereby being cooled through heat exchange with the raw materials before the gases are directed to a flue gas filter to be purified before being discharged into the atmosphere

Generally the raw materials used contain varying but often quite considerable amounts of easily evaporating compounds, such as chlorine, sulfur, potassium and sodium, which are harmful to the product proper and to the manufacturing process. In a conventional kiln plant of the above mentioned type such compounds, even though a major part of them evaporate from the clinker during the sintering process, will be recovered in condensing during the passage of the flue gases up through the preheater or the precalciner and then together with the added raw materials be returned to the kiln. Thus, the chloride and alkali content continues to increase during the manufacturing process until a critical value of the precipitated compounds is reached resulting in the risk of said compounds depositing as blockings and bakings in the riser pipes, the precipitator cyclones and the smoke chamber of the kiln

As also disclosed in the above mentioned US patent specification, the plant may be provided with a bypass to counteract the above mentioned drawbacks so that part of the kiln flue gases is diverted from the preheater and the precalciner and passed into a separat filter. A bypass for 5-10% of the flue gas is normally sufficient to reduce the amount of chlorine compounds or chlorides in the flue gas, while a reduction of the remainder of the volatile components (e.g. sulfur, potassium, sodium) requires a bypass for 30-60% of the amount of flue gas. The bypass according to said patent specification removes chloride from the kiln system by quenching or cooling the bypassed flue gas with air, thereby causing the chlorides to condense and subsequently to precipitate together with material dust contained in the flue gas in a separate bypass filter and then to be removed from the process. However, the method according to the US patent specification suffers from the drawback that such a plant requires two filters the primary filter and the bypass filter, and that the material dust precipitated in the bypass filter has to be removed completely from the process together with the harmful uncondensed chlorides without allowing the reuse of the material dust in the process in an economical manner, thereby improving the operating economy of the plant.

GB No 1,319,180 discloses a kiln plant having a bypass without a separat bypass filter and in which plant the bypassed flue gas is fed directly into the primary filter and purified in same together with the dust-laden flue gas from the preheater. The bypass contains a cyclone precipitator for precipitating larger particles of material with insignificant chloride and alkali content for reuse in the process, whereas all material dust precipitated in the primary filter has to be diverted from the process due to its contents of chlorides and alkalis the harmful effects of which prevent it from being reused Thus, the advantage of using one filler only in this type of plant is compensated by the disadvantage in having completely to remove all the dust precipitated in the primary filter from the process.

Danish patent application No. 2483/86 (corresponding to EP application No. 0209961) discloses a bypass installation in a kiln plant having only one filter also, but said bypass being limited to treating only flue gas from burning clinker having a relatively insignificant amount of added chloride (0.015-0.1 percent by weight).

US patent specifications Nos. 3,212,764 and 3,288,450 disclose examples of kiln plants provided with a bypass for part of the flue gas said bypass containing a precipitator cyclone for precipitaing alkalis from the flue gas, the filter dust from the filter of the kiln plant being directed to the precipitator cyclone of the bypass as a coolant causing the alkali vapours in this cyclone to condense upon the dust particles which are subsequently precipitated and discharged completely from the process. The method according to these patent specifications implies the condensation of the alkalis upon the dust particles at a temperature of 500-700°C, the cooling obtained by means of recirculated filter dust or by adding other fine-grained material being relatively insignificant. Thus, in practice it will prove difficult to obtain a sufficient cut size of the precipitator cyclone through this method to ensure an effective alkali purification of the smoke.

A similar method involving identical problems is described in DE 32 15 793 A1. The method described in said document further comprises the step of injecting water into a reactor for the purpose of supporting sulphur bonding reactions.

French patent No. 2,127,665 discloses a method of manufacturing clinker whereby a part of the flue gas is bypassed and fed in a hot state into a rector vessel wherein fine droplets of water are sprayed from the top of the vessel. The intention with this process is to make chloride and alcali vapour precipitate on the surface of the water droplets, forming particles which will drop to the bottom of the vessel from where they can be collected while the cleaned gas together with evaporated water is conveyed to the primary gas cleaning filter. Practical experiments have shown that this process does not yield satisfactory results, The effeciency in terms of removing chloride and alkali from the gas is too low which is believed to be attributable to the fact that the surface area of the water droplets is insufficient for the purpose, Furthermore, the product collected from the bottom of the reactor is voluminous containing a mixture of chloride and alcali together with water and kiln feed, The removal and disposal of this product represents a considerable cost.

Therefore, it is the object of the invention to provide a method and an apparatus for an improved treatment of bypass flue gas from a kiln plant to remedy the above mentioned drawbacks, and which allow the reuse of precipitated dust both from the primary filter of the plant and from the treatment of the bypass flue gas,

This object is obtained in a method of the type described in the preamble of claim 1 and which is characterized by the features stated in the characterizing part of the claim.

A particularly preferred embodiment of the method is stated in claim 2.

Furthermore, the object is obtained by means of an apparatus for carrying out the method in the manner stated in claim 6.

The present invention is particularly advantageous in that the bypassed flue gas is humidified during its treatment in a bypass reactor, e.g. of the gas suspension-absorption type, enabling by way of a large issue of moistened particles and using the surfaces of these particles to make chlorides and alkalis to deposit upon these particles and to be transported together with them up through the reactor, the alkalis and the salts thus being dissolved on the wet particle surfaces and then through the evaporation of the water in the reactor at a reactor temperature of about 150°C to precipitate as salt or dust particles in the reactor flue gas. The particles are then precipitated from the flue gas in the subsequent separator so as to reduce the risk of deposits upon and hence blockings of or backings in adjacent plant parts,

The material dust precipitated from the bypass reactor may be recirculated to same before being discharged from the process, 90-95% of the chlorides and alkalis contained in the bypassed flue gas are precipitated in the bypass, the bypassed flue gas which is then fed to the primary filter of the plant being thus almost completely purified of harmful compounds which makes it possible to reuse in the kiln system proper all material dust precipitated in the primary filter, said dust being added to the preheater in a known way together with added raw materials. Furthermore, the filter installation of a kiln plant constituting an essential part of the total plant investments may due to the present flue gas purification requirements and operating and control equipment herefore be reduced to a single filter, namely the primary filter.

The inevitably larger total calorie consumption of the plant using a bypass according to the invention is compensated partly by a more profitable end product due to the better quality of the latter (low alkali content), partly by the reduction of the risk of plant stops due to blockings of exposed parts of the plant.

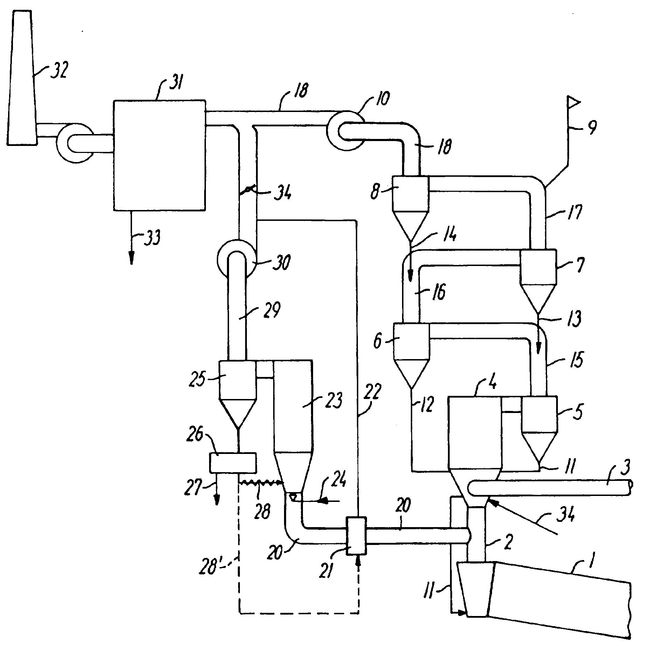

The invention will be explained in further detail in the following with reference to the drawing which diagramatically and without being limiting illustrates an example of a rotary kiln plant having a precalciner and a one-stringed suspension preheater and being provided with a bypass installation according to the invention.

Raw materials are fed into the plant at 9, preheated counter-currently by flue gas from a rotary kiln 1 in a cyclone preheater consisting of cyclones 6, 7 and 8 and appertaining riser pipes 15, 16 and 17 and material ducts 12, 13 and 14, precalcined in a suspension precalciner 4, precipitated from the flue gas in a cyclone separator 5 and directed to the kiln 1 as preheated and precalcined raw material via a duct 11. Combustion air is conveyed to the precalciner 4 partly as kiln flue gas via a kiln riser pipe 2, partly as spent cooler air via a duct 3 from a material cooler (not shown) coupled after the kiln 1. Fuel is fed into the precalciner at 34, The kiln and precalciner flue gases are drawn up through the preheater by a fan 10 and conveyed through the duct 18 to a filter 31, e.g. an electrofilter, in which the flue gases are purified of entrained material dust which is discharged through an outlet 33 and optionally via homogenizing bins (not shown) recirculated to the kiln plant for renewed treatment in same together with the raw materials introduced at 9. Purified flue gas is discharged into the atmosphere from the filter 31 via a fan and a stack 32. The kiln riser pipe 2 is provided with a bypass installation 20-30 for diverting part of the kiln flue gas from the precalciner and preheater to the filter 31. After quenching by means of recirculated, cooled bypass dust introduced via a conveyer 28 and by means of recirculated, cooled flue gas introduced via a duct 22 to a quenching or mixing chamber 21 mounted in the bypass duct 20, the flue gas is conveyed to a cylindrical reactor 23 having a conical bottom with a central inlet therein for flue gas. Simultaneously with the feeding of flue gas into the reactor 23 water is injected into same through a nozzle 24 in or near the bottom of the reactor. Quenching by means of recirculating cooled dust and flue gas causes salts, including chlorides, in the flue gas to condense and solidify, thereby removing their sticking effect prior to the treatment in the reactor 23, and the introduction of water through the nozzle 24 causes a dispersion of the water upon the dust particles and hence an evaporation of the water in the reactor from same particles, thereby further reducing the flue gas temperature in the reactor down to about 150°C. The salts and the dust particles introduced with the flue gas are caught upon the surfaces of the moistened recirculated dust particles, thereby causing said particles to grow in size and be transported up through the reactor 23 on evaporation of the water. These particles are then precipitated from the flue gas in a separator 25 coupled after the reactor 23, and from the separator 25 the precipitated particles are then fed into a bin 26 to be returned to the reactor 23 either via the conveyor 28 or to the mixing chamber 21 via a duct 28', or to be discharged from the process via an outlet 27. On the effect from a fan 30 purified bypass smoke gas is transported through a duct 29 to the filter 31 for a final purification of the last fine residue of material dust together with the purification of the flue gas from the preheater. By means of a throttle valve 34 in the duct 29 and via the duct 22 part of the purified, cooled bypass flue gas may be recirculated to the mixing chamber 21 to be used as coolant in the latter for the bypassed flue gas from the kiln 1.

Calculations have shown that the increase in the running costs of a bypass installation plant according to the invention is modest in that the increase is mainly due to an additional electric power consumption for the fan 30, and that the pressure loss over the reactor 23 and the separator 25 may be limited to 100-200 mmWC which is only slightly more than the pressure loss over a conventional cooling tower being replaced according to the invention by these parts of the bypass installation.

## Claims

1. A method for the manufacture of clinker from mineral raw materials, e. g. cement clinker, said method comprising
preheating the raw materials by conveying them through a suspension preheater (6, 7, 8) countercurrently to hot flue gas,
burning and sintering the preheated raw materials in a kiln (1) to form the clinker,
cooling the clinker removed from the kiln in a cooler,
cleaning the flue gas discharged from the preheater by conveying it through a flue gas cleaning filter (31),
diverting a part of the flue gas discharged from the kiln and conveying it through a flue gas by-pass (20-30) wherein it is treated with cooled dust or particles in a mixing chamber (21), conveyed to a reactor (23) wherein water is injected and subsequently into a separator wherein the major part of the particles formed in said reactor (23) and comprising chlorides sulphur and alkalis are separated from the flue gas,
conveying the flue gas from the separator to the flue gas cleaning filter, and
recirculating a part of the particles from the separator to the mixing chamber,
characterized in that
by injecting said water into said reactor (23) the flue gas temperature is brought down to about 150 °C,
whereby wet particles are formed in the reactor, which upon their surfaces dissolve the alkalis and the salts and then following evaporation of the water in the reactor form precipitated salt/dust particles, which are transported upwards in the reactor and separated from the flue gas by means of a cyclone separator.

2. A method according to claim 1, **characterized** in that part of the flue gas which is purified and cooled in the bypass after having passed the bypass separator (25) is recirculated to the quenching step (21) of the bypass as cooling air for the bypass flue gas from the kiln.

3. A method according to claim 2, **characterized** by the recirculation of the purified and cooled by-pass gas being controlled by means of a throttle valve (34) arranged in the duct leading from the separator to the flue gas filter.

4. A method according to claim 1, 2 or 3, **characterized** by quenching the by-pass flue gas by means of recirculated cooled dust and flue gas to make salts including chlorides to condense and solidify prior to the treatment with water in the reactor.

5. A method according to any of the claims 1 through 4, **characterized** by recirculating part of the particles from the separator into the reactor.

6. An apparatus for carrying out the method according to any one of the claims 1 through 5 with the purpose of substantially removing chlorides, sulphur and alkalis from the by-pass flue gas, wherein said by-pass comprises
a mixing chamber (21) connected to receive the diverted part of the kiln flue gas and to receive recirculated cooled particles,
a reactor (23) connected to receive gas with suspended particles from the mixing chamber and provided with at least one water injection nozzle,
a cyclone separator (25) connected to receive gas with suspended particles from the reactor, adapted for separating a major part of the particles from the gas and connected to convey the separated gas to the flue gas filter,
a bin adapted for receiving particles discharged from the separator and from where the particles may be discharged from the process,
and means (28') for recirculating part of the particles discharged from the separator to the mixing chamber.

7. An apparatus according to claim 6, **characterized** by comprising means (22,34) for recirculating cooled, purified by-pass flue gas as cooling air to the mixing chamber (21).

8. An apparatus according to claim 7, **characterized** by comprising a throttle valve means (34) for controlling the recirculation of cooled, purified flue gas to the mixing chamber (21).

9. An apparatus according to claim 6, 7 or 8, **characterized** by comprising means for recirculating part of the particles discharged from the separator to the reactor.

10. An apparatus according to any of claims 6 through 9, **characterized** by the reactor being designed as a cylindrical vessel having a conical bottom with a central inlet therein for kiln flue gas.

## Patentansprüche

1. Verfahren zur Herstellung von Klinker aus mineralischen Rohmaterialien, z.B. Zementklinker, welches Verfahren umfaßt
Vorwärmen der Rohmaterialien, indem sie durch einen Schwebegasvorwärmer (6, 7, 8) in Gegenstrom zu heißem Rauchgas gefördert werden,
Brennen und Sintern der vorgewärmten Rohmaterialien in einem Ofen (1), um den Klinker zu bilden,
Kühlen des aus dem Ofen entnommenen Klinkers in einem Kühler,
Reinigen des aus dem Vorwärmar ausgestoßenen Rauchgases, indem es durch ein Rauchgasreinigungsfilter (31) gefördert wird,
Umleiten eines Teils des aus dem Ofen ausgestoßenen Rauchgases und Fördern durch einen Rauchgasbeipass (20-30), in dem es in einer Mischkammer (21) mit gekühltem Staub oder Partikeln behandelt wird, zu einem Reaktor (23), in dem Wasser eingespritzt wird, und anschließend in einen Abscheider gefördert wird, in dem der Hauptteil der in dem Reaktor (23) gebildeten Partikel, die Chloride, Schwefel und Alkali enthalten, von dem Rauchgas getrennt werden,
Fördern des Rauchgases von, dem Abscheider zu dem Rauchgasreinigungsfilter, und
Rezirkulieren eines Teils der Partikel von dem Abscheider Zu der Mischkammer,
**dadurch gekennzeichnet**, daß
durch das Einspritzen des Wassers in den Reaktor (23) die Rauchgastemperatur auf etwa 150 °C abgesenkt wird,
wobei nasse Partikel in dem Reaktor gebildet werden, welche auf ihren Oberflächen die Alkalis und Salze auflösen und dann auf die Verdampfung des Wasser in den Reanktor folgend ausgefällte Salz-/Staubpartikel bilden, die dann in dem Reaktor nach oben transportiert werden und mittels eines Zyklonabscheiders von dem Rauchgas getrennt werden.

2. Verfahren nach Anspruch 1, **dadurch gekennzeichnet**, daß ein Teil des Rauchgases, welches im Beipass gereinigt und gekühlt wird, nachdem es den Beipassabscheider (25) durchlaufen hat, zur Abschreckstufe (21) des Beipasses als Kühlluft für das Beipassrauchgas von dem Ofen rezirkuliert wird.

3. Verfahren nach Anspruch 2, **dadurch gekennzeichnet**, daß die Rezirkulation des gereinigten und gekühlten Beipassgases mittels eines in der Rohrleitung zwischen dem Abscheider und dem Rauchgasfilter angebrachten Drosselventils (34) geregelt wird.

4. Verfahren nach Anspruch 1, 2 oder 3, **dadurch gekennzeichnet**, daß das Beipassrauchgas mittels rezirkuliertem, gekühltem Staub und Rauchgas abgeschreckt wird, um die Chloride enthaltenden Salze vor der Behandlung mit Wasser im Reaktor zum Kondensieren und Erstarren zu bringen.

5. Verfahren nach jeden beliebigen Ansprüchen von 1 bis 4, **dadurch gekennzeichnet**, daß ein Teil der Partikel von dem Abscheider in den Reaktor rezirkuliert wird.

6. Vorrichtung zur Ausführung des Verfahrens nach einem der Ansprüche von 1 bis 5 zu dem Zweck, im wesentlichen Chloride, Schwefel und Alkali aus dem Beipdssrauchgas zu entfernen, bei welcher der Beipass enthält
eine Mischkammer (21), die zur Aufnahme des umgeleiteten Teils des Ofenrauchgases und Aufnahme der rezirkulierten, gekühlten Partikel angeschlossen ist,
einen Reaktor (23), der zur Aufnahme von Gas mit Schwebepartikeln von der Mischkammer angeschlossen ist und mit mindestens einer Wassereinspritzdüse versehen ist,
einen Zyklonabscheider (25), der zur Aufnahme von Gas mit Schwebepartikeln von dem Reaktor angeschlossen ist und so ausgelegt ist, daß er einen Hauptteil der Partikel aus dem Gas abscheidet, und zum Fördern des abgeschiedenen Gases zu dem Rauchgasfilter angeschlossen ist,
einen Behälter, der so ausgelegt ist, daß er aus dem Abscheider ausgetragene Partikel aufnimmt, und aus dem die Partikel aus dem Prozess ausgetragen werden können,
und eine Einrichtung (28') zum Rezirkulieren eines Teils der aus dem Abscheider in die Mischkammer ausgetragenen Partikel.

7. Vorrichtung nach Anspruch 6, **dadurch gekennzeichnet**, daß sie Mittel (22,34) zur Rezirkulation gekühlten, gereinigten Beipassrauchgases als Kühlluft zur Mischkammer (21) umfaßt.

8. Vorrichtung nach Anspruch 7, **dadurch gekennzeichnet,** daß sie ein Drosselventilmittel (34) zur Regelung der Rezirkulation des gekühlten, gereinigten Rauchgases zur Mischkammer (21) umfaßt.

9. Vorrichtung nach Anspruch 6, 7 oder 8, **dadurch gegennzeichnet**, daß sie Mittel zur Rezirkulation eines Teils der vom Abscheider ausgetragenen Partikel zum Reaktor umfaßt.

10. Vorrichtung nach jeden beliebigen Ansprüchen von 6 bis 9, **dadurch gekennzeichnet**, daß der Reaktor als ein zylindrischer Behälter mit einem konischen Boden mit einem Zentraleinlaß darin für Ofenrauchgas ausgelegt ist.

## Revendications

1. Procédé de fabrication de clinkers à partir de matières premières minérales par exemple fabrication de clinkers de ciment, ledit procédé comprenant
le préchauffage des matières premières en les acheminant à travers un préchauffeur à suspension (6, 7, 8) à contre-courant du gaz de fumée chaud,
la calcination et le frittage des matières premières préchauffées dans un four (1) pour former les clinkers, le refroidissement dans un refroidisseur des clinkers enlevés du four, le nettoyage du gaz de fumée venant du préchauffeur en les acheminant à travers un filtre de nettoyage (31) de gaz de fumée, la déviation d'une partie de gaz de fumée venant du four et l'acheminement de celle-ci à travers un by-pass (20-30) de gaz de fumée où celle-ci est traitée avec de la poussière ou des particules refroidies dans une chambre de mélange (21), convoyée vers un réacteur (23) dans lequel de l'eau est injectée et ensuite dans un séparateur où la plus grande partie des particules formées dans ledit réacteur (23) et comprenant des chlorures, du souffre et des alcalis sont séparées du gaz de fumée, le convoyage du gaz de fumée du séparateur au filtre de nettoyage du gaz de fumée et
la recirculation d'une partie des particules du séparateur à la chambre de mélange, caractérisé en ce que,
par l'injection de ladite eau dans ledit réacteur (23), la température du gaz de fumée est réduite à environ 150°C
par quoi les particules humides sont formées dans le réacteur qui, sur leurs surfaces, dissolvent les alcalis et les sels et qui, à la suite de l'évaporation de l'eau dans le réacteur, forment ensuite des particules de sel/poussière précipitées qui sont transportées vers le haut dans le réacteur et sont séparées du gaz de fumée au moyen d'un séparateur à cyclone.

2. Procédé selon la revendication 1, **caractérisé** en ce qu'une partie du gaz de fumée, étant purifiée et refroidie dans le by-pass après avoir passé le séparateur (25) du by-pass, est récirculée au refroidissement brusque (21) du by-pass comme air de refroidissement pour le gaz de fumée venant du four.

3. Procédé selon la revendication 2, **caractérisé** par la récirculation du gaz du by-pass purifié et refroidi étant commandé au moyen d'un papillon (34) monté dans la conduite reliant le séparateur au filtre de gaz de fumée.

4. Procédé selon la revendication 1, 2 ou 3, **caractérisé** par le refroidissement brusque du gaz de fumée du by-pass au moyen de la poussière et du gaz refroidis et récirculés dans le but de faire condenser et solidifier les sels, les chlorures y compris, avant le traitement à l'eau dans le réacteur.

5. Procédé selon l'une quelconque des revendications 1 à 4, **caractérisé** par la récirculation d'une partie des particules du séparateur vers le réacteur.

6. Appareil destiné à l'exécution du procédé selon l'une des revendications 1 à 5 dans le but d'enlever la plupart des chlorures, du souffre et des alcalis des gaz de fumée du by-pass, où ledit by-pass comprend
une chambre de mélange (21) branchée pour recevoir la partie de gaz de fumée déviée venant du four et pour recevoir les particules refroidies et recirculées,
un réacteur (23) branché pour recevoir le gaz avec les particules en suspension venant de la chambre de mélange et qui est muni d'au moins une lance d'injection d'eau, un séparateur à cyclone (25) branché pour recevoir le gaz avec les particules en suspension venant du réacteur, adapté pour séparer la plupart des particules du gaz et branché pour acheminer le gaz séparé vers le filtre de gaz de fumée,
un réservoir adapté pour recevoir les particules déchargées du séparateur et à partir duquel les particules peuvent être déchargées du procédé,
et des moyens (28') pour recirculer une partie des particules déchargées du séparateur vers la chambre de mélange.

7. Appareil selon la revendication 6, **caractérisé** par les moyens (22, 34) pour récirculer le gaz de fumée refroidi et nettoyé du by-pass comme air de refroidissement vers la chambre de mélange (21).

8. Appareil selon la revendication 7, **caractérisé** par le papillon (34) pour commander la récirculation du gaz de fumée refroidi et nettoyé du by-pass vers la chambre de mélange (21).

9. Appareil selon la revendication 6, 7 ou 8, **caractérisé** en ce qu'il comprend des moyens pour la récirculation des particules déchargées du séparateur vers le réacteur.

10. Appareil selon l'une quelconque des revendications 6 à 9, **caractérisé** par le réacteur étant conçu comme un récipient cylindrique avec un fond conique à entrée centrale pour le gaz de fumée du four.
